# FASCICULE DE BREVET EUROPEEN

(11) **EP 0 990 886 B1**
(45) Date de publication et mention de la délivrance du brevet: **14.01.2009**
(21) Numéro de dépôt: 99402286.1
(22) Date de dépôt: 20.09.1999
(51) Int. Cl.: G01M 3/20

(54) **Détecteur de fuite compact**
Kompakter Leckagendetektor
Compact leak detector

(30) Priorité: 01.10.1998 FR 9812290
(43) Date de publication de la demande: 05.04.2000
(73) Titulaire: Alcatel Lucent, 75008 Paris (FR)
(72) Inventeur: Paquet, Jean Marc, 74940 Annecy le Vieux (FR); Baret, Gilles, 74000 Annecy (FR)
(74) Mandataire: Korakis-Ménager, Sophie

(56) Documents cités:
- JP-A- 06 137 986
- US-A- 4 399 690
- US-A- 4 761 553

## Description

Un détecteur de fuite est une machine complexe comportant une multitude d'éléments connectés entre eux. Les principaux éléments constitutifs d'un détecteur de fuite sont : un groupe de pompage primaire, un groupe de pompage secondaire, un analyseur de gaz, et un ensemble de vannes et de jauges de mesure de pression.

Ces éléments sont reliés par des tronçons de liaison.

Les tronçons de liaison actuellement utilisés sont des tubes corrugués ou équivalent présentant une étanchéité intrinsèque très bonne et des dispositifs mécaniques de connexion, entre les dits tubes et les éléments constitutifs du détecteur de fuite, présentant, eux aussi, une bonne étanchéité. Néanmoins, il est nécessaire de tester scrupuleusement l'étanchéité des tronçons de liaison une fois montés. Ces tests sont longs et augmentent sensiblement les temps de fabrication des détecteurs de fuite.

En outre, des distances minimales entre lesdits éléments constitutifs du détecteur de fuite sont nécessaires afin de permettre le montage desdits tronçons de liaison rapportés. De ce fait, la compacité des détecteurs de fuite est limitée, et les performances du détecteur de fuite sont limitées par les pertes de charges dans les tronçons de liaison rapportés. US 4 399 690 décrit un détecteur de fuite.

L'un des buts de la présente invention est de proposer un détecteur de fuite dont le nombre de tronçons de liaison rapportés est sensiblement réduit, permettant ainsi une augmentation de la fiabilité de l'étanchéité dé l'appareil, en même temps qu'une diminution des pertes de charges et donc une augmentation des performances de l'appareil.

Un autre but de la présente invention est de proposer un détecteur de fuite dont l'encombrement est sensiblement réduit.

A cet effet l'invention concerne un détecteur de fuite comprenant les éléments suivants :
• un analyseur de gaz,
• un premier groupe de pompage,
• un module de test comprenant une entrée destinée à être connectée à une pièce à tester, relié à l'aspiration du premier groupe de pompage par un tronçon de liaison comportant une vanne,
• un bloc monobloc comprenant des espaces permettant l'intégration d'au moins un élément du détecteur de fuite,
• un deuxième groupe de pompage qui est un groupe de pompage secondaire comprenant au moins une pompe turbomoléculaire ayant un carter de stator constitué par un alésage dans ledit bloc monobloc, dont l'aspiration est connectée d'une part à l'analyseur de gaz par un tronçon de liaison et d'autre part au module de test par une tronçon de liaison comportant une vanne,
• un module de refoulement du groupe de pompage secondaire, la sortie du deuxième groupe de pompage étant relié à l'aspiration du premier groupe de pompage par un tronçon de liaison .comportant une vanne,
• un module d'étalonnage relié à l'analyseur de gaz par un tronçon de liaison comportant une vanne et à aspiration du premier goupe de pompage par un tronçon de liaison comportant une vanne.

Selon l'invention, le bloc principal monobloc comprend au moins :
• un alésage formant le carter du stator de la pompe du groupe de pompage secondaire,
• un espace formant carter pour l'analyseur de gaz,
• un conduit alésé formant le tronçon de liaison entre l'analyseur de gaz et l'aspiration du groupe de pompage secondaire,
• des conduits alésés dans le bloc principal monobloc pour former une partie desdits tronçons de liaison et une partie des carters desdites vannes, et
• des entrées et sorties de bloc permettant de relier les composants intégrés dans le bloc principal avec les modules de test et d'étalonnage est le module de refoulement.

Le groupe de pompage primaire comprend une pompe turbomoléculaire en série avec une pompe primaire, ladite pompe turbomoléculaire ayant un carter de stator constitué par un alésage dans ledit bloc principal.

Le bloc principal présente avantageusement une partie effilée amagnétique dans laquelle a été aménagé l'espace pour l'analyseur de gaz de type spectromètre de masse magnétique, l'aimant du spectromètre de masse magnétique venant s'intégrer à cheval sur ladite partie effilée.

Dans une forme de réalisation de l'invention, le détecteur de fuite comprend en outre un bloc de refoulement monobloc comprenant :
• des conduits alésés dans le bloc de refoulement monobloc pour former une partie desdits tronçons de liaison et une partie des carters desdites vannes du module de refoulement du groupe de pompage secondaire, et
   des entrées et sorties de bloc, venant en correspondance avec les sorties et entrées de bloc correspondantes du bloc principal pour relier le refoulement du groupe de pompage secondaire à l' aspiration du premier groupe de pompage par l'intermédiaire d'une vanne d'isolement.

Dans une autre forme de réalisation de l'invenlion, le détecteur de fuite comprend en outre un bloc test et étalonnage monobloc comprenant :
• des conduits alésés formant une partie desdits tronçons de liaison et une partie des carters desdites vannes des modules de test et d'étalonnage, et
• des entrées et sorties de bloc, venant en correspondance avec les sorties et entrées de bloc correspondantes du bloc principal pour relier le module de test et d'étalonnage à l'aspiration du groupe de pompage secondaire d'une part et à l'aspiration du premier groupe de pompage d'autre part.

Les monoblocs peuvent être réalisés par tous moyen connu, notamment par usinage ou moulage.

Un premier avantage de la présente invention résulte de l'intégration dans le ou les blocs monoblocs d'un certain nombre, voire la totalité des tronçons de liaison.

Un autre avantage de la présente invention, découlant du précédent, résulte de l'intégration des principaux éléments constitutifs du détecteur de fuite dans des alésages ou espaces aménagés à cet effet dans les blocs monoblocs, réduisant considérablement les espaces entre lesdits éléments, et donc augmentant la compacité et les performances du détecteur de fuite.

D'autres avantages et caractéristiques de la présente invention résulteront de la description qui va suivre en référence aux dessins annexés dans lesquels :
La figure 1 est un schéma de principe d'un détecteur de fuite selon un mode de réalisation de l'invention.
Les figures 2A et 2B sont des représentations schématiques d'un bloc principal selon l'exemple de réalisation de la présente invention.
La figure 3 est une représentation schématique en coupe selon la ligne III-III de la représentation de la figure 2A.

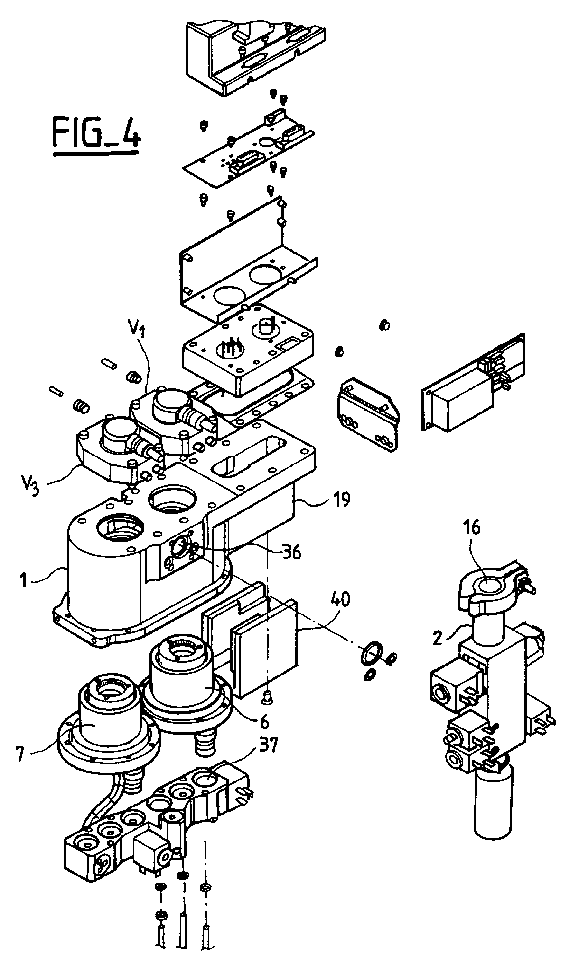

La figure 4 est une représentation schématique éclatée de l'exemple de réalisation d'un détecteur de fuite selon l'invention.

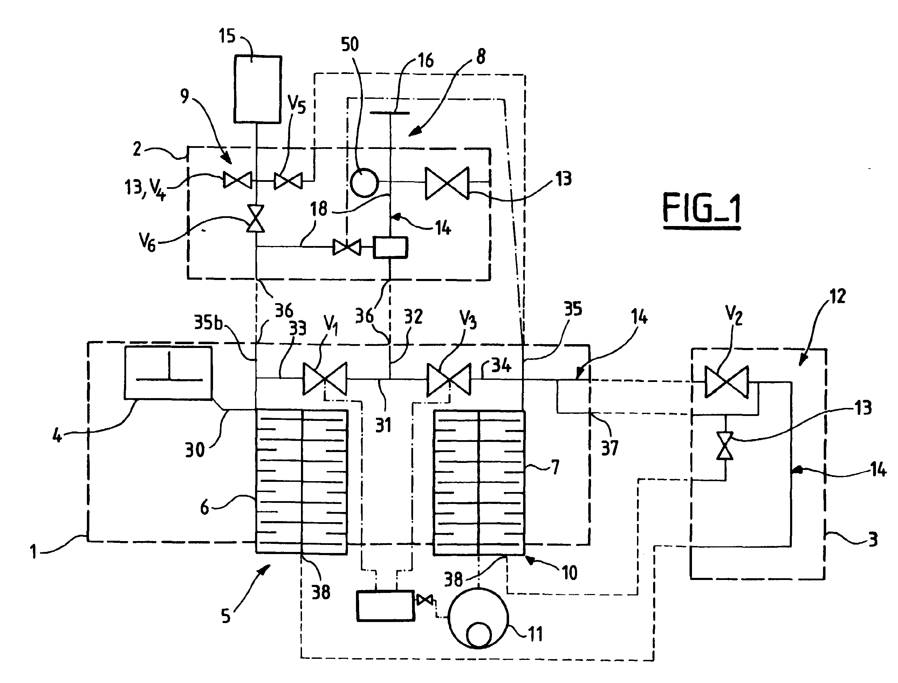

L'objet de la présente invention est un détecteur de fuite compact. Plus particulièrement la présente invention est relative à un détecteur de fuite compact à analyseur de gaz. Le principe de fonctionnement d'un tel détecteur est largement connu. Un schéma de principe d'un détecteur de fuite selon l'invention est représenté sur la figure 1.

Un détecteur de fuite à analyseur de gaz comprend les éléments suivant :
un analyseur de gaz 4,
un groupe de pompage secondaire 5 assurant un vide poussé au niveau l'analyseur de gaz,
un module de test 8, permettant de se connecter à la pièce à tester,
un module d'étalonnage 9, permettant l'étalonnage de l'analyseur de gaz,
un groupe de pompage primaire 10 d'entretien du vide dans le groupe de pompage secondaire.

Tous ces éléments constitutifs du détecteur de fuite sont reliés entre eux par des tronçons de liaison 14.

Selon l'invention, au moins un certain nombre des éléments constitutifs du détecteur de fuite est intégré dans un bloc principal monobloc 1 comprenant des aménagements d'intégration 20,...,30.

La description de l'invention sera faite sur la base du schéma de principe représenté sur la figure 1. Néanmoins la présente invention ne se limite pas à l'exemple de réalisation proposé dans ce schéma de principe.

Le groupe de pompage secondaire 5 comprend au moins une pompe 6, par exemple de type turbomoléculaire, dont l'aspiration est connectée d'une part a l'analyseur de gaz et d'autre part, par l'intermédiaire d'une vanne de test V₁, au module de test 8. Le refoulement de la pompe 6 est connecté à l'aspiration du groupe de pompage primaire 10 par l'intermédiaire d'une vanne d'isolement V₂.

Le groupe de pompage primaire comprend une pompe 7 par exemple de type turbomoléculaire dont l'aspiration est connectée à la vanne V2, et, en parallèle, à une vanne V3 de pré-vidage. La vanne V3 est connectée d'une part à la vanne de test V2, et d'autre part au module de test 8.

Le refoulement de la pompe 7 est connecté à une pompe 11 primaire (pompe de type à palettes à huile, ou à membrane, ou roots multi-étages, ou scroll, ou à vis, etc.).

Le module d'étalonnage est du type à fuite calibrée. Il comprend une enceinte 15 ayant une fuite calibrée reliée à l'air ambiant par une vannes V4 d'entrée d'air, à l'aspiration de la pompe 7 de pré-vidage par une vanne V5 de pré-vidage et a l'analyseur de gaz par une vanne V6 de détection.

Le module de test 8 comprend une entrée de test 16 destinée à être connectée à la pièce à tester (non représentée).

L'analyseur de gaz est de type à spectrométrie de masse.

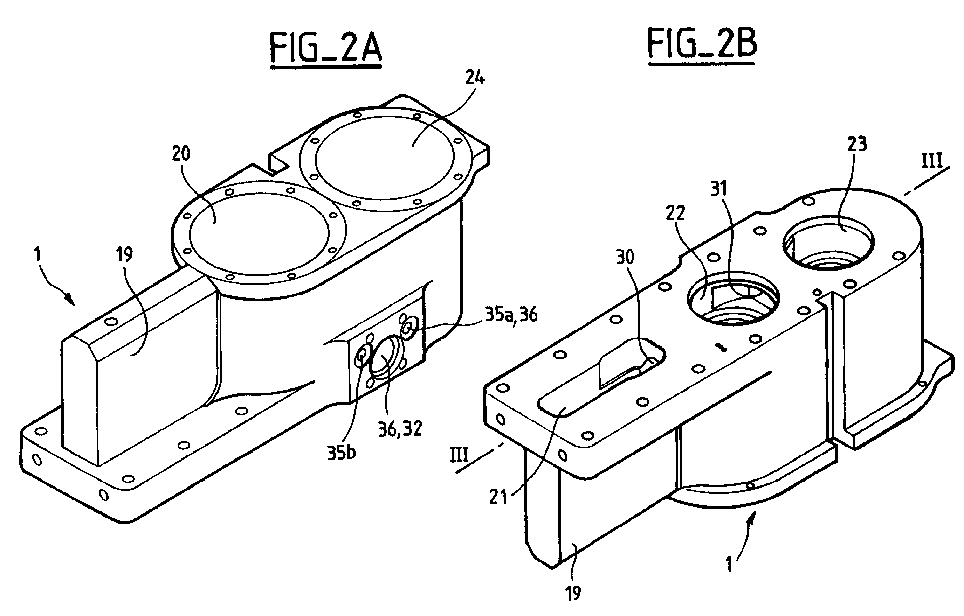

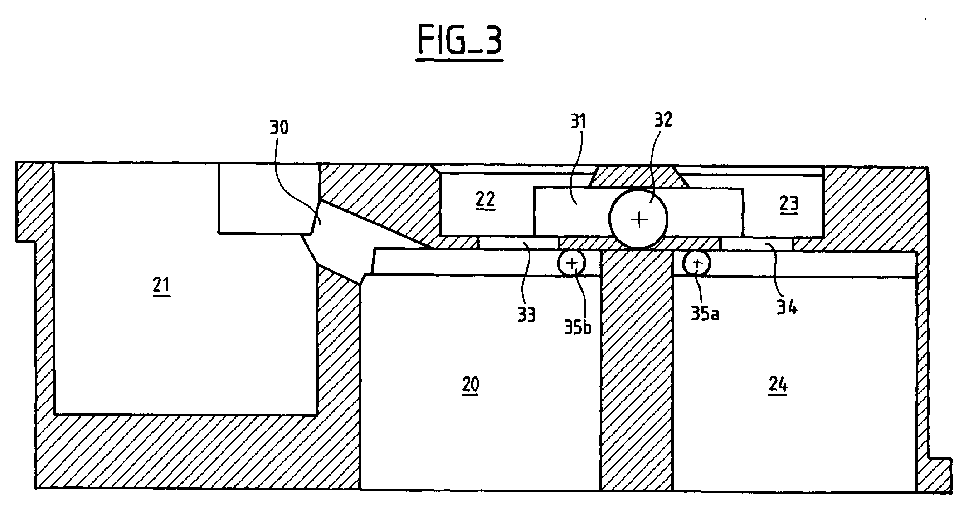

Selon le mode de réalisation représenté sur les figures 2A et 2B et 3, le bloc principal usiné monobloc 1 comprend :
un alésage 20 formant le carter du stator de la pompe turbomoléculaire 6 du groupe de pompage secondaire 5,
un espace 21 formant carter pour l'analyseur de gaz,
les carters 22, 23 de la vanne V1 d'isolement de test, et de la vanne V3 de pré-vidage (Ces vannes peuvent être avantageusement des vannes à dépression, l'énergie de commande des vannes étant, par exemple, fournie par piquage sur la pompe primaire),
un alésage 24 formant le carter du stator de la pompe turbomoléculaire 7 du groupe de pompage primaire 10,
une partie des tronçons de liaison est aménagée dans le bloc principal 1 :
   - le tronçon de liaison 30 entre l'analyseur de gaz 4 et l'aspiration de la pompe turbomoléculaire 6 du groupe de pompage secondaire 5,
   - le tronçon de liaison 31 entre la vanne V1 d'isolement de test et la vanne V3 de pré-vidage,
   - le tronçon de liaison 32 entre les vannes V1,V3 d'isolement de test et de pré-vidage, et le module de test
   - le tronçon de liaison 33 entre la vanne V1 d'isolement de test et l'aspiration de la pompe turbomoléculaire 6 du groupe de pompage secondaire 5,
   - le tronçon de liaison 34 entre la vanne V3 de pré-vidage et l'aspiration de la pompe turbomoléculaire 7 du groupe de pompage primaire 10,
   - le tronçon de liaison 35 entre le module d'étalonnage et l'aspiration de la pompe turbomoléculaire 7 du groupe de pompage primaire 10.

Selon le mode de réalisation de l'invention, le bloc principal monobloc 1 comprend une partie effilée 19 dans laquelle a été aménagé l'espace 21 pour un analyseur de gaz de type spectromètre de masse magnétique. Le bloc principal monobloc 1 étant avantageusement en matière amagnétique, l'aimant 40, nécessaire au bon fonctionnement du spectromètre de masse magnétique 4, vient s'intégrer à cheval sur la partie effilée 19.

Selon l'invention, le détecteur de fuite comprend un bloc test et étalonnage monobloc 2, comprenant :
des conduits alésés 18 formant une partie desdits tronçons de liaison 14 et une partie des carters des vannes des modules de test 8 et d'étalonnage 9, une jauge de pression 50 et
des entrées et sorties 36 de bloc, venant en correspondance avec les sorties et entrées 36 de bloc correspondantes du bloc principale 1.

Selon l'invention, le détecteur de fuite comprend un bloc de refoulement monobloc 3, comprenant :
des conduits alésés 18 formant une partie desdits tronçons de liaison 14 et une partie des carters desdites vannes du module de refoulement 12, et
des entrées et sorties 37 de bloc, venant en correspondance avec les sorties et entrées 37 de bloc correspondantes du bloc principal 1 ou des sorties de refoulement 38 des pompes turbomoléculaires 6, 7.

Les blocs monoblocs selon l'invention peuvent être fabriqués selon toutes les méthodes existantes, notamment par usinage ou moulage, ou une combinaison des deux.

Bien entendu, l'invention n'est pas limitée au mode de réalisation décrit et représenté, mais elle est susceptible de nombreuses variantes accessibles à l'homme du métier sans que l'on s'écarte de l'invention.

## Revendications

1. Détecteur de fuite comportant les éléments suivants :
- un analyseur de gaz (4),
- un premier groupe de pompage (10),
- un module de test (8),comprenant une entrée (16) destinée être connectée à une pièce à tester, relié à l'aspiration du premier groupe de pompage (10) par un tronçon de liaison (32, 34) comportant une vanne (V3),
- un bloc monobloc (1) comprenant des espaces (20 ... 24) permettant l'intégration d'au moins un élément du détecteur de fuite,
**caractérisé en ce qu'**il comprend en outre :
- un deuxième groupe de pompage qui est un groupe de pompage secondaire, (5) comprenant au moins une pompe turbomoléculaire (6) ayant un carter de stator constitué par un alésage (20) dans ledit bloc monobloc (1), dont l'aspiration est connectée d'une part à l'analyseur de gaz (4) par un tronçon de liaison (30) et d'autre part au module de test (8) par un tronçon de liaison (32, 33) comportant une vanne (V1),
- un module de refoulement (12) relié à la sortie (38) du groupe de pompage secondaire (5), la sortie (38) du deuxième, groupe de pompage (5) étant relié à l'aspiration du premier groupe de pompage (10) par un tronçon de liaison (14) comportant une vanne (V2),
- un module d'étalonnage (9) relié à l'analyseur de gaz (4) par un tronçon de liaison comportant une: vanne (V6) et à l'aspiration du premier groupe de pompage (10) par un tronçon de liaison (35) comportant une vanne (V5).

2. Détecteur de fuite selon la revendication 1, dans lequel le bloc principal monobloc (1) comprend
- un alésage (20) formant le carter du stator de la pompe du groupe de pompage secondaire (5),
- un espace (21) formant carter pour l'analyseur de gaz (4),
- un conduit alésé (30) formant le tronçon de liaison entre l'analyseur de gaz (4) et l'aspiration du groupe de pompage secondaire (5),
- des conduits alésés(31 ... 35) dans le bloc principal monobloc (1) pour former une partie desdits tronçons de liaison (14) et une partie des carters desdites vannes (V1, V3), et
- des entrées et sorties de bloc (36, 37, 38) permettant de relier les éléments intégrés dans le bloc principal (1) avec les modules de test (8) et d'étalonnage (9) et le module de refoulement (12).

3. Détecteur de fuite selon l'une des revendications 1 et 2, dans lequel le groupe de pompage primaire (10) comprend une pompe turbomoléculaire (7) en série avec une pompe primaire (11), ladite pompe turbomoléculaire (7) ayant un carter de stator constitué par un alésage (24) dans ledit bloc principal (1).

4. Détecteur de fuite selon l'une des revendications précédentes, dans lequel l'analyseur de gaz (4) est du type spectromètre de masse magnétique, le bloc principal (1) présentant une partie effilée (19) amagnétique dans laquelle a été aménagé un espace (21) pour le spectromètre de masse magnétique, un aimant (40) venant s'intégrer à cheval sur ladite partie effilée (19).

5. Détecteur de fuite selon l'une des revendications précédentes, comprenant en outre un bloc de refoulement monobloc (3) comprenant :
- des conduits alésés dans le bloc de refoulement monobloc (3) pour former une partie desdits tronçons de liaison (14) et une partie des carters desdites vannes (V2) du module de refoulement (12) du groupe de pompage secondaire (5), et
- des entrées et sorties de bloc (37, 38) venant en correspondance avec les sorties et entrées de bloc correspondantes du bloc principal (1) pour relier le refoulement du groupe de pompage secondaire (5) à l'aspiration du premier groupe de pompage (10) par l'intermédiaire d'une vanne d'isolement (V2).

6. Détecteur de fuite selon l'une des revendications précécédentes, comprenant en outre un bloc test et étalonnage monobloc (2) comprenant :
- des conduits alésés (18) formant une partie desdits tronçons de liaison (14) et une partie des carters desdites vannes (V4, V6, V5) des modules de test et d'étalonnage (8, 9), et
- des entrées et sorties de bloc (36) venant en correspondance avec les sorties et entrées de bloc correspondantes du bloc principal (1) pour relier le module de test et d'étalonnage (8, 9) à l'aspiration du groupe de pompage secondaire, (5) d'une part et. a l'aspiration du premier groupe de pompage (10) d'autre part.

7. Détecteur de fuite selon l'une des revendications précédentes, dans lequel les blocs monoblocs sont des blocs moulés.

8. Détecteur de fuite selon l'une des revendications 1 à 6, dans lequel les blocs monoblocs sont des blocs usinés.

## Claims

1. A leak detector comprising the following elements:
- a gas analyzer (4),
- a first pumping unit (10),
- a testing module (8), comprising an intake (16) intended to be connected to a part to be tested, connected to the suction inlet of the first pumping group (10) by a connection segment (32, 34) comprising a valve (V3),
- a single-piece block (1) comprising spaces (20 ... 24) enabling the integration of at least one leak detector element.
**characterized in that** it further comprises:
- a second pumping unit, which is a secondary pumping unit (5) comprising at least one turbomolecular pump (6) having a stator case made up of a bore (20) within said single-piece block (1), whose suction inlet is connected both to the gas analyzer (4) by a connection segment (30) and to the testing module (8) by a connection segment (32, 33) comprising a valve (V1),
- a discharge module (12) connected to the outlet (38) of the secondary pumping unit (5), the outlet (38) of the second pumping unit (5) being connected to the suction inlet of the first pumping unit (10) by a connection segment (14) comprising on valve (V2),
- a calibration module (9) connected to the gas analyzer (4) by a connection segment comprising a valve (V6), and to the suction inlet of the first pumping unit (10) by connection segment (35) comprising a valve (V5),

2. A leak detector according to claim 1, wherein the main single-piece block (1) comprises:
- a bore (20) forming the case of the stator of the pump of the secondary pumping group (5),
- a space (21) forming the case for the gas analyzer (4),
- a bored conduit (30) forming the connection segment between the gas analyzer (4) and the suction inlet of the secondary pumping unit (5),
- conduits (31 ... 35) bored into the main single-piece block (1) to form a part of said connection segments (14) and a part of the cases of said valves (V1, V3), and
- block intakes and outlets (36, 37, 38) for connecting the elements incorporated into the main block (1) with the test module (8), calibration module (9), and discharge module (12).

3. A leak detector according to one of claims 1 and 2, wherein the primary pumping unit (10) comprises a turbomolecular pump (7) disposed serially with a primary pump (11), said turbomolecular pump (7) having a stator case made up of a bore (24) in said main block (1).

4. A leak detector according to one of claims 1 and 2, wherein the gas analyzer (4) is a magnetic mass spectrometer, the main block (1) having a non-magnetic tapered portion (19) within which a space (21) has been provided for the magnetic mass spectrometer, a magnet (40) being integrated straddling said tapered portion (19).

5. A leak detector according to one of the above claims, further comprising a single-piece discharge block (3) comprising:
- conduits bored into the main single-piece block (3) to form a part of said connection segments (14) and a part of the cases of said valves (V2) of the discharge module (12) of the secondary pumping group (5), and
- block intakes and outlets (37, 38) aligning with the corresponding block outlets and intakes of the main block (1) for connecting the discharge of the secondary pumping unit (5) to the suction intake of the first pumping unit (10) by means of an isolation valve (V2).

6. A detector according to one of the above claims, further comprising a single-piece testing and calibration block (2) comprising:
- bored conduits (18) forming a part of said connection segments (14) and a part of the cases of said valves (V4, V6, V5) of the testing and calibration modules (8, 9), and
- block intakes and outlets (36) aligning with the corresponding block outlets and intakes of the main block (1) for connecting the testing and calibration module (8, 9) both to the suction intake of the secondary pumping unit (5) and to the suction intake of the first pumping unit (10).

7. A leak detector according to one of the above claims, wherein the single-piece blocks are molded blocks.

8. A leak detector according to one of claims 1 to 6, wherein the single-piece blocks are machined blocks.

## Patentansprüche

1. Leckagendetektor, welcher die folgenden Elemente umfasst:
- Ein Gasanalsegerät (4),
- einen ersten Pumpensatz (10),
- ein Testmodul (8), welches einen Eingang (16) umfasst, der für den Anschluss an ein zu testendes Teil bestimmt ist, wobei das Testmodul über einen Verbindungsabschnitt (32, 34), der ein Ventil (V3) umfasst, mit der Saugvorrichtung des ersten Pumpensatzes (10) verbunden ist,
- einen einteiligen Block (1) mit Hohlräumen (20 ... 24), welche das Integrieren von mindestens einem Element des Leckagendetektors ermöglichen,
**dadurch gekennzeichnet, dass** er weiterhin umfasst:
- einen zweiten Pumpensatz, welcher ein Sekundär-Pumpensatz (5) ist und mindestens eine Turbomolekularpumpe (6) mit einem durch eine Bohrung (20) in dem besagten einteiligen Block (1) gebildeten Statorgehäuse umfasst, dessen Saugvorrichtung einerseits über einen Verbindungsabschnitt (30) an das Gasanalysegerät (4) und andererseits übe einen Verbindungsabschnitt (32, 33), welcher ein Ventil (V1) umfasst, mit dem Testmodul (8) verbunden ist,
- ein Druckmodul (12), welches an den Ausgang (38) des sekundären Pumpensatzes (5) angeschlossen ist, wobei der Ausgang (38) des zweiten Pumpensatzes (5) über einen Verbindungsabschnitt (14), welcher ein Ventil (V2) umfasst, mit der Saugvorrichtung des ersten Pumpensatzes (10) verbunden ist,
- ein Kalibrierungsmodul (9), welches über einen Verbindungsabschnitt, welcher ein Ventil (V6) umfasst, mit dem Gasanalysegerät (4) und über einen Verbindungsabschnitt (35), welcher ein Ventil (V5) umfasst, mit der Saugvorrichtung des ersten Pumpensatz (10) verbunden ist.

2. Leckagendetektor nach Anspruch 1, in welchem der einteilige Hauptblock (1) umfasst:
- Eine Bohrung (20), welche das Gehäuse für den Stator der Pumpe des sekundären Pumpensatzes (5) bildet,
- einen Hohlraum (21), welcher das Gehäuse für das Gasanalysegerät (4) bildet,
- einen ausgebohrien Kanal (30), welcher den Verbindungsabschnitt zwischen dem Gasanalysegerät (4) und der Saugvorrichtung des sekundären Pumpensatzes (5) bildet,
- ausgebohrte Kanäle (31 ... 35) im einteiligen Hauptblock (1), welche einen Teil der besagten Verbindungsabschnitte (14) und einen Teil der Gehäuse der besagten Ventile (V1, V2) bilden, und
- Blockeingänge und -ausgänge (36, 37, 38), welche es ermoglichen, die im Hauptblock (1) integrierten Elemente mil den Testmodulen (8) und den Kalibrierungsmodulen (9) sowie mit dem Druckmodul (12) zu verbinden.

3. Leckagendetektor nach einem der Ansprüche 1 und 2, in welchem der primäre Pumpensatz (10) eine mit einer Primärpumpe (11) in Reihe geschaltete Turbomolekularpumpe (7) umfasst, wobei die Turbomolekularpumpe (7) ein Statorgehäuse aufweist, welches aus einer Bohrung (24) im besagten Hauptblock (1) besteht.

4. Leckagendetektor nach einem der vorstehenden Ansprüche, in welchem das Gasanalysegerät (4) vom Typ eines magnetischen Massenspektrometers ist, wobei der Hauptblock (1) einen verjüngten amagnetischen Teil (19) aufweist, in welchem ein Hohlraum (21) für das magnetische Massenspektrometer eingerichtet wurde, wobei ein Magnet (40) über dem besagten verjüngten Teil positioniert wird (19).

5. Leckagendetektor nach einem der vorstehenden Ansprüche, welcher weiterhin einen einteiligen Druckblock (3) einschließt, welcher umfasst:
- Im einteiligen Druckblock (3) ausgebohrte Kanale , welche einen Teil der besagten Verbindungsabschnitte (14) und einen Teil der Gehäuse der besagten Ventile (V2) des Druckmoduls (12) der sekundären Pumpensatzes (5) bilden, und
- Block-Eingänge und -Ausgänge (37, 38), welche in Übereinstimmung mit den entsprechenden Aus- und Eingängen des Hauptblocks (1) positioniert sind, um die Druckvorrichtung des sekundären Pumpensatzes (5) über ein Absperrventil (V2) mit der Saugvorrichtung des ersten Pumpensatzes (10) zu verbinden.

6. Leckagendetektor nach einem der vorstehenden Anspruche, welcher weiterhin einen einteiligen Test- und Kalibrierungsblock (2) einschheßt, welcher umfasst:
- Ausgebohrte Kanäle (18), welche einen Teil der besagten Verbindungsabschnitte (14) und einen Teil der Gehäuse der besagten Ventile (V4, V6, V5) der Test- und Kalibrierungsmodule (8, 9) bilden, und
- Block-Eingänge und -Ausgänge (36), welche in übereinstimmung mit den entsprechenden Aus- und Eingängen des Hauptblocks (1) positioniert sind, um das Test- und Kalibrierungsmodul (8, 9) einerseits mit der Saugvorrichtung des sekundären Pumpensatzes (5) und andererseits mit der Saugvorrichtung des ersten Pumpensatzes (10) zu verbinden.

7. Leckagendetektor nach einem der vorstehenden Ansprüche, in welchem die einteiligen Blöcke geformte Blöcke sind.

8. Leckagendetektor nach einem der Ansprüche 1 bis 6, in welchem die eintelligen Blöcke maschinell bearbeitete Blöcke sind.
